# EUROPÄISCHE PATENTSCHRIFT

(11) **EP 1 842 034 B1**
(45) Veröffentlichungstag und Bekanntmachung des Hinweises auf die Patenterteilung: **06.04.2011**
(21) Anmeldenummer: 05803502.3
(22) Anmeldetag: 16.11.2005
(51) Int. Cl.: G01D 5/36, G01V 8/18, G01D 5/32, B23Q 17/24

(54) **VERFAHREN ZUR ERMITTLUNG DER POSITION EINES VENTILS EINES VERBRENNUNGSMOTORS BEIM KALTTEST**
METHOD FOR DETERMINING THE POSITION OF A VALVE OF AN INTERNAL COMBUSTION ENGINE DURING A COLD TEST
PROCEDE POUR DETERMINER LA POSITION D'UNE SOUPAPE D'UN MOTEUR A COMBUSTION INTERNE PENDANT UN ESSAI A FROID

(30) Priorität: 28.01.2005 DE 102005004248
(43) Veröffentlichungstag der Anmeldung: 10.10.2007
(73) Patentinhaber: ThyssenKrupp Krause GmbH, 28777 Bremen (DE)
(72) Erfinder: KLEMMER, Detlef, 28790 Schwanewede (DE); HUCK, Andreas, 32425 Minden (DE)
(74) Vertreter: Möller, Friedrich
(86) Internationale Anmeldenummer: PCT/EP2005/012267
(87) Internationale Veröffentlichungsnummer: WO 2006/079377

(56) Entgegenhaltungen:
- DE-A1- 4 028 969
- DE-U- 20 116 202
- GB-A- 465 406
- JP-A- 2000 042 870
- US-A- 4 145 608
- US-A- 4 246 478
- US-A- 4 838 696
- US-A- 5 506 681

## Beschreibung

Die Erfindung betrifft ein Verfahren zur Ermittlung der Position mindestens eines Ventils eines Verbrennungsmotors.

Zur Prüfung und/oder Überwachung von Verbrennungsmotoren ist es erforderlich, Positionen bestimmter bewegter Bauteile, insbesondere von Ventilen, zu ermitteln. Es werden bestimmte Stellungen der Ventile und/oder kontinuierlich zeitliche Bewegungsabläufe erfasst.

Aus der DE 40 28 969 A1 und der US-A-4 145 608 ist bekannt, die Stellung einer Kurbelwelle eines Verbrennungsmotors durch optische Detektion von Öffnungen einer mit der Kurbelwelle rotierend verbundenen Scheibe zu ermitteln. Eine Feststellung der Position von Bauteilen des Verbrennungsmotors, wie beispielsweise eines Ventils, ist dabei nur indirekt möglich, indem aus der Stellung der Kurbelwelle die Sollposition des Ventils bestimmt wird. Die tatsächliche Position des Ventils kann beispielsweise durch Produktions- oder Montagefehler von ihrer Sollposition abweichen. Diese und ähnliche Fehler bzw. Abweichungen lassen sich mit den bekannten Verfahren nicht bestimmen.

Aus der DE 201 16 202 U1 ist ein Ventil mit einem Ventilstellungssensor bekannt. Es wird ein Pneumatik- bzw. Hydraulikventil offenbart, welches eine Einrichtung zur Ermittlung der Ventilstellung durch elektromagnetische Wellen, welche durch ein teilweise geöffnetes Ventil hindurchtreten, aufweist. Die Sensoren sowie die Vorrichtung zur Einbringung der elektromagnetischen Wellen, welche auch Licht sein können, sind fest am Ventil verbaut. Diese Vorrichtung lässt sich jedoch nicht auf einen Verbrennungsmotor übertragen, da in diesem vollständig veränderte Betriebsbedingungen, wie z.B. hohe Temperaturen, vorliegen.

Der Erfindung liegt nun die Aufgabe zugrunde, ein Verfahren zur Ermittlung mindestens der Position eines Ventils eines Verbrennungsmotors zu schaffen, womit ein korrektes Öffnen und/oder Schließen des Ventils erkannt werden kann.

Ein Verfahren zur Lösung dieser Aufgabe weist die Maßnahmen des Anspruchs 1 auf. Das erfindungsgemäße Verfahren wird durchgeführt bei geschlepptem Verbrennungsmotor. Demnach wird Licht ausgenutzt zur Ermittlung vorzugsweise der Position des Ventils, indem der Lichtdurchtritt und/oder auch eine Unterbrechung des Lichtdurchtritts zwischen dem Ventil und einem damit korrespondierenden Ventilsitz ermittelt wird. Der Lichtdurchtritt ist ein zuverlässiger Indikator für die Stellung des Ventils. Die Stellung des Ventils lässt sich so mit einfachsten Mitteln zuverlässig ermitteln. Außerdem ist durch die Verwendung von Licht das erfindungsgemäße Verfahren weitestgehend unabhängig vom zu prüfenden Ventil. Insbesondere kann zuverlässig und einfach die Position beliebiger Ventile unabhängig vom Material derselben und ohne störende Nebeneinflüsse ermittelt werden.

Vorzugsweise wird die Position des Ventils zu einem Zeitpunkt ermittelt, zu dem das Ventil eine solche Position eingenommen hat, bei dem kein oder nahezu kein Lichtdurchtritt ermittelbar ist und/oder ein maximaler Lichtdurchtritt feststellbar ist. Besonders die Ermittlung der Position des Ventils bei keinem oder nahezu keinem Lichtdurchtritt lässt eine überraschend exakte Feststellung der Position des Ventils zu, weil es mindestens eine bestimmte Stellung des Ventils gegenüber dem Ventilsitz gibt, bei der es durch teilweises Anliegen an mindestens einem korrespondierenden Ventilsitz eine momentan den Lichtdurchtritt verhindernde Stellung des Ventils gibt.

Beim bevorzugten Verfahren wird eine Seite des Ventils beleuchtet oder dem Licht ausgesetzt, während an einer anderen Seite, vorzugsweise einer abgeschatteten Seite, der vom Ventil zugelassene oder auch unterbrochene Lichtdurchtritt ermittelt wird. Das Licht kann auf die eine Seite des Ventils entweder durch mindestens eine externe Lichtquelle aufgebracht werden oder es kann in der Umgebung vorhandenes Licht ausgenutzt werden. Im letztgenannten Falle erübrigt sich eine externe Lichtquelle. Dadurch kann auch die Position oder Stellung eines schwer zugänglichen Ventils kontinuierlich oder während mindestens eines bestimmten Zeitpunkts ermittelt werden. Besonders gute Messergebnisse lassen sich auch ohne externe Lichtquellen erreichen, wenn die der vom Licht beaufschlagten Seite gegenüberliegende Seite des Ventils sich in einem stark abgeschatteten, verdunkelten oder gar dunklen Raum befindet. Dann kann der geringste Lichteinfall zur zuverlässigen Ermittlung einer bestimmten Position oder Stellung des Ventils herangezogen werden. Aber auch jeder sich auch nur leicht ändernde Abstand des Ventils zu einem anderen Bauteil lässt sich aus einem dunklen, verdunkelten oder abgeschatteten Raum heraus zuverlässig und exakt ermitteln.

Besonders vorteilhafte Messergebnisse lassen sich mit dem erfindungsgemäßen Verfahren erzielen, wenn das Ventil, von dem die Position oder Stellung ermittelt werden soll, einen zumindest relativ dunklen Raum begrenzt oder sich mindestens teilweise hierin befindet. Wenn dann dieses Ventil in mindestens einem Teil dichtend an einem Ventilsitz anliegt, wird ein Lichtdurchtritt momentan unterbrochen, so dass das Ventil den von ihm begrenzten Raum völlig abdunkelt. Auf diese Weise ist besonders zuverlässig mindestens eine konkrete Stellung oder Position des Ventils ermittelbar.

Das erfindungsgemäße Verfahren kann so eingesetzt werden, dass der Lichtdurchtritt, einschließlich Unterbrechungen desselben, fortlaufend über der Zeit ermittelt wird, und zwar vorzugsweise über mehrere Bewegungszyklen des Ventils, von dem die Position ermittelt werden soll. Auf diese Weise lässt sich kontinuierlich der zeitliche Verlauf der Bewegung des Ventils darstellen. Hieraus lassen sich charakteristische Stellungen, beispielsweise die Stellung des Ventils, bei dem kein Lichtdurchtritt erfolgt oder ein maximaler Lichtdurchtritt festgestellt wird, zuverlässig ermitteln. Es ist aber auch möglich, durch den zeitlichen Verlauf der Änderung des Lichtdurchtritts oder der Unterbrechung des Lichtdurchtritts neben gezielten Stellungen und Positionen Geschwindigkeiten der Bewegung des Ventils und/oder ungewünschte Bewegungen zu ermitteln.

Alternativ ist es möglich, die Position des Ventils gezielt nur dann zu ermitteln, wenn kein oder kein nennenswerter Lichtdurchtritt vorhanden ist und/oder ein maximaler Lichtdurchtritt feststellbar ist. So lassen sich zuverlässig konkrete Stellungen des Ventils ermitteln. Die Ermittlung dieser konkreten Stellung kann auch zeitbezogen erfolgen, so dass aus den ermittelten Werten weitere Informationen abgeleitet werden können, beispielsweise die Drehzahl eines Motors oder eines Getriebes, insbesondere eines Automatikgetriebes.

Das Verfahren eignet sich in besonderer Weise dazu, die Stellung mindestens eines Ventils eines Verbrennungsmotors zu ermitteln, in der der Lichtdurchtritt unterbrochen ist, wenn sich das Ventil in der Schließstellung befindet. Das erfindungsgemäße Verfahren ermöglicht es deshalb besonders zuverlässig, die Schließstellung des jeweiligen Ventils zu ermitteln.

Das zur Durchführung des Verfahrens erforderliche Licht wird dem jeweiligen Ventil vorzugsweise von einer zum Ventilschaft weisenden Seite zugeführt. Dazu eignet sich besonders ein Luftansaug- und/oder ein Abgaskanal. Bei Verbrennungsmotoren mit indirekter Einspritzung kann auch der Sitz und Durchlass eines unmontierten Einspritzventils herangezogen werden, um alternativ oder zusätzlich Licht der zum Ventilschaft weisenden Seite des Ventiltellers zuzuführen. Es kann sich bei dem Licht um Umgebungslicht oder auch mindestens eine zusätzliche Lichtquelle handeln, wodurch eine besonders intensive Lichtbeaufschlagung der Oberseite des Ventils zustande kommt.

Weiterhin wird nach dem Verfahren der Lichtdurchtritt oder die Unterbrechung desselben bei geschlossenem Ventil ermittelt vom kolbenoberseitigen Zylinderraum, nämlich Brennraum, aus. Insbesondere bei geschlossenem Ventil ist der Brennraum dunkel. Dadurch kann sehr präzise festgestellt werden, wann das Ventil geschlossen ist.

Die Ermittlung des Lichtein- und/oder -durchtritts erfolgt durch einen geeigneten Sensor, insbesondere einen lichtsensitiven Sensor, der ein sich mit der Intensität des einfallenden Lichts vorzugsweise proportional änderndes Messsignal abgibt. Im Falle der Ermittlung der Stellung von Ventilen kann der Lichtsensor durch die jeweilige Zündkerzenbohrung (bei nicht eingeschraubter Zündkerze) hindurchgeschoben oder auch nur in die Zündkerzenbohrung eingesetzt werden. Dabei kann der Sensor so ausgebildet sein, dass er im eingesetzten Zustand die Zündkerzenbohrung lichtundurchlässig verschließt, so dass hierdurch kein Lichteinfall in den Brennraum erfolgt. Bei Verbrennungsmotoren mit einer direkten Einspritzung in den Brennraum kann der Sensor auch alternativ durch die Bohrung der (dann nicht eingesetzten) Einspritzdüse hindurchgeführt werden. Dies kann auch so erfolgen, dass ein Lichtdurchtritt zwischen der Bohrung der Einspritzdüse und dem Sensor verhindert wird. In diesem Falle ist die Zündkerzenbohrung bereits durch eine eingesetzte Zündkerze vorzugsweise blickdicht verschlossen.

Bevorzugt wird der Verbrennungsmotor mit einer verhältnismäßig geringen Drehzahl angetrieben, beispielsweise einer Drehzahl zwischen 200 und 500 min⁻¹, insbesondere etwa 100 min⁻¹. Hierdurch kann eine sehr gute Auflösung der Messergebnisse erreicht werden, wobei die Messung im oder beim Kalttest des Verbrennungsmotors durchführbar ist.

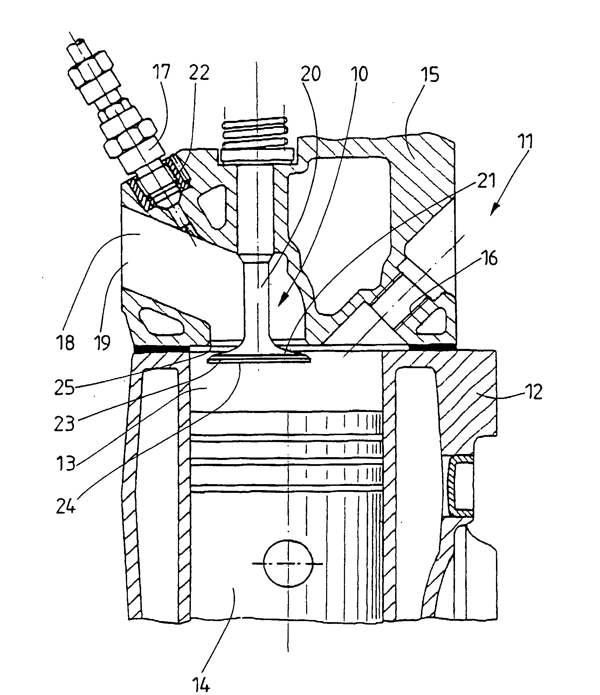

Ein bevorzugtes Ausführungsbeispiel der Erfindung wird nachfolgend anhand der Zeichnung erläutert. Die einzige Figur der Zeichnung zeigt einen Querschnitt durch einen oberen Teil eines Verbrennungsmotors.

Die Erfindung wird im Folgenden am Beispiel der Ermittlung der Stellung eines Ventils 10 des teilweisen in der Figur gezeigten Verbrennungsmotors 11 erläutert. Die Figur zeigt einen oberen Teil eines Motorblocks 12 bei mittig geschnittenem Brennraum 13 und einem oberen Teil eines sich nahe des oberen Totpunkts befindenden Kolbens 14. Der untere Teil des Verbrennungsmotors 11, insbesondere Pleuel, Kurbelwelle und Ölwanne, sind nicht gezeigt. In der Figur ist außerdem ein Querschnitt durch einen auf dem Motorblock 12 montierten Zylinderkopf 15 dargestellt. Der Schnitt des Zylinderkopfs 15 verläuft durch den Sitz des hierin bereits funktionsfähig montierten Ventils 10. In Bezug auf die gezeigte Figur ist rechts neben dem Ventil 10 eine Zündkerzenbohrung 16 vorhanden, die bei noch nicht eingesetzter Zündkerze eine äußere Zugänglichkeit des Brennraums 13 schafft.

Beim hier gezeigten Verbrennungsmotor 11 handelt es sich um einen solchen mit einer indirekten Einspritzung. Deswegen ist im Zylinderkopf 15 ein Einspritzventil 17 eingeschraubt. Das Einspritzventil 17 befindet sich auf der der Zündkerzenbohrung 16 gegenüberliegenden Seite des Zylinderkopfs 15. Der Zylinderkopf weist auf der Seite des Einspritzventils 17 (linke Seite in Bezug auf die Figur) einen Luftansaugkanal 18 auf. An diesen ist noch kein Luftansaugkrümmer angeschlossen, so dass die Luftzufuhröffnung 17 des Luftansaugkanals 18 von außen offen ist.

Durch die offene Luftzuführöffnung 19 des Luftansaugkanals 18 kann Licht von außen auf die mit einem Ventilschaft 20 verbundene Oberseite 21 des Ventils 10 fallen. Bevorzugt wird aber in der Nähe der Luftzuführöffnung 19 des Luftansaugkanals 18 oder sogar im Luftansaugkanal 18 mindestens eine zusätzliche Lichtquelle angeordnet, beispielsweise eine in der Figur nicht gezeigte Halogenlampe. Die Halogenlampe kann eine Leistung von bis zu mehreren 100 Watt aufweisen. Vorzugsweise liegt die Leistung der Halogenlampe im Bereich von 20 bis 75 Watt.

Alternativ oder zusätzlich kann durch das Fehlen des Einspritzventils 17 durch die dann offene Einspritzventilbohrung 22 Licht der Oberseite 21 des Ventils 10 zugeführt werden. Dabei reicht das Umgebungslicht aus. Vorzugsweise wird aber auch eine Lampe der Einspritzventilbohrung 22 zugeordnet. Dann braucht der Luftzuführöffnung 19 keine Lampe zugeordnet sein, so dass hier bereits der Luftansaugkrümmer angeschlossen sein kann.

In der noch freien Zündkerzenbohrung 16 im Zylinderkopf 15 wird ein lichtsensitives Organ angeordnet. Hierbei handelt es sich vorzugsweise um einen in der Figur nicht dargestellten Lichtsensor. Der Lichtsensor kann so ausgebildet sein, dass er sich durch die Zündkerzenbohrung 16 hindurch erstreckt und gegenüber dieser lichtundurchlässig abgedichtet ist, so dass der Lichtsensor einen Lichtdurchtritt durch die Zündkerzenbohrung 16 verhindert. Der Lichtsensor kann so weit in der Zündkerzenbohrung 16 eingeschoben sein, dass sein Detektionspunkt noch im Bereich der Zündkerzenbohrung 16 liegt. Vorzugsweise ist der Lichtsensor aber stabförmig ausgebildet und so weit durch die Zündkerzenbohrung 16 hindurchgeschoben, dass sich die lichtsensitive Stelle des Sensors im oberen Bereich des Brennraums 13 befindet, den der Kolben 14 selbst in seiner obersten Position (oberer Totpunkt) nicht erreicht. Dadurch kann der Lichtsensor mit seiner lichtsensitiven Messstelle den Lichtdurchtritt in der Nähe des Ventiltellers 23 des Ventils 10, insbesondere der Unterseite 24 des Ventiltellers 23, erfassen.

Das erfindungsgemäße Verfahren läuft zur Ermittlung der Position eines, vorzugsweise eines jeden Ventils 10, insbesondere der jeweiligen Ventilstellung, folgendermaßen ab:

Der Verbrennungsmotor 11 ist so weit vormontiert, dass er im unbefeuerten Zustand schleppend antreibbar ist. Das erfindungsgemäße Verfahren lässt sich so während des sogenannten Kalttests des Verbrennungsmotors 11 durchführen. Insbesondere ist der Zylinderkopf 15 mit den Ventilen 10 montiert. Die Ventile sind auch durch die Nockenwelle betätigbar, indem sie sich im Zylinderkopf 15 so auf- und abbewegen, wie das bei befeuertem Verbrennungsmotor 11 der Fall wäre. Im gezeigten Ausführungsbeispiel ist lediglich der Luftzufuhrkrümmer an den Luftansaugkanälen 18 noch nicht montiert und es sind auch die Zündkerzen noch nicht in die Zündkerzenbohrungen 16 eingesetzt.

Es wird nun durch die Luftzuführöffnung 19 Licht einer vorzugsweise separaten Lichtquelle in den Luftansaugkanal 18 geleitet. Das Licht ist auf die Oberseite 21 des Ventiltellers 23 gerichtet und tritt bei ganz oder teilweise geöffnetem Ventil 10 durch einen Zwischenraum zwischen dem Ventilteller 23 und einem Ventilsitz 25 an der Unterseite des Zylinderkopfs 15 in den Brennraum 13 ein.

In die Zündkerzenbohrung 16 bzw. durch dieselbe hindurch ist ein Lichtsensor oder ein sonstiges lichtsensitives Mittel hindurchgeführt. Dies geschieht vorzugsweise lichtdicht, so dass zwischen dem Lichtsensor und der Zündkerzenbohrung 16 kein Licht hindurchtreten kann. Demzufolge kann Licht schon bei ganz oder teilweise geöffnetem Ventil 10 nur durch den Luftansaugkanal 18 hindurch in den Brennraum 13 gelangen.

Mit zunehmender Öffnung des Ventils 10 vergrößert sich der Lichteintritt in den Brennraum 13, indem zunehmend mehr Licht zwischen dem Ventilteller 23 und dem Ventilsitz 25 hindurch in den Brennraum 13 gelangt. Bei vollständig geschlossenem Ventil 10 ist der Lichtdurchtritt zwischen dem Ventilteller 23 und dem Ventilsitz 25 und damit der Lichteintritt in den Brennraum 13 kurzfristig ganz unterbrochen, so dass der Brennraum 13 vollständig abgedunkelt ist. Bei vollständig geschlossenem Ventil 10 erhält dadurch der Lichtsensor ein eindeutiges Signal. Ein weiteres eindeutiges Signal erhält der Lichtsensor bei vollständig geöffnetem Ventil 10, wenn der Lichteintritt in den Brennraum 13 maximal ist.

Die Ermittlung der Stellung des jeweiligen Ventils 10 des Verbrennungsmotors 11 erfolgt beim schleppenden Antrieb desselben mit einer Drehzahl von bis zu 200 min⁻¹, vorzugsweise etwa 100 min⁻¹. Dabei wird kontinuierlich, fortlaufend ermittelt, ob und wie viel Licht in den Brennraum 13 durch den Zwischenraum zwischen dem Ventilteller 23 und dem Ventilsitz 25 eintritt. Die Messung der Lichtintensität im Brennraum 13 bzw. die vollständige Abdunklung desselben wird vorzugsweise zeitbezogen durchgeführt, wodurch aufgrund der Proportionalität zwischen der Intensität des Lichts im Brennraum 13 bzw. die kurzzeitige Abdunklung desselben die Position bzw. Stellung des jeweiligen Ventils 10 bezogen auf den Betriebszyklus des Verbrennungsmotors 11 ermittelbar ist. Insbesondere lassen sich wegen der vollständigen Verdunklung des Brennraums 13 bei vollständig geschlossenen Ventilen 10 zuverlässige Rückschlüsse auf die Schließstellung der Ventile 10 herleiten.

Vorzugsweise wird nach dem erfindungsgemäßen Verfahren die Stellung jedes Ventils 10 des Verbrennungsmotors 11 für sich fortlaufend ermittelt, wobei insbesondere anhand der definiert ermittelbaren Schließstellungen der Ventile 10 die Zündfolge und der zeitliche Abstand zwischen dem vollständigen Schließen der einzelnen Ventile 10 feststellbar ist.

Alternativ zum vorstehend beschriebenen Verfahren kann das jeweilige Ventil 10 auch vom Abgaskanal aus mit Licht angestrahlt werden oder es erfolgt die Lichtzuführung zum jeweiligen Ventil 10 über den Abgaskanal und Luftansaugkanal 18.

Alternativ kann bei indirekter Einspritzung, wie sie beim in der Figur gezeigten Verbrennungsmotor 11 erfolgt, die Lichtzufuhr auch zusätzlich oder nur durch die Einspritzventilbohrung 22 bei nichtmontiertem Einspritzventil 17 erfolgen.

Bei Verbrennungsmotoren mit direkter Einspritzung, wo die Einspritzventilbohrung direkt in den Brennraum 13 mündet, kann der Lichtsensor auch durch die Einspritzväntilbohrung hindurch die Lichtintensität im Brennraum 13 ermitteln, so dass dann die Zündkerzen montiert sein können.

Das erfindungsgemäße Verfahren eignet sich auch zur Vermittlung mindestens der Position anderer bewegter Bauteile von Verbrennungsmotoren, Getrieben oder anderen Antriebsaggregaten. Bei Verbrennungsmotoren können zum Beispiel die Stellungen von Nocken- und Kurbelwellen, Kolben oder dergleichen ermittelt werden. Dabei ist es nicht unbedingt notwendig, dass der Lichtdurchtritt in einem dunklen oder nahezu dunklen Brennraum 13 ermittelt wird. Der Lichtdurchtritt kann auch an einer von der Lichtquelle abgewandten Seite des Bauteils ermittelt werden, die dem Umgebungslicht ausgesetzt ist.

Das erfindungsgemäße Verfahren lässt sich bei Getrieben jeder Art, und zwar Schaltgetrieben und Automatikgetrieben, einsetzen. Bei Automatikgetrieben kann das erfindungsgemäße Verfahren beispielsweise eingesetzt werden, um die Stellung von Schaltplatten zu ermitteln.

## Patentansprüche

1. Verfahren zur Ermittlung der Position eines Ventils (10) beim Kalttest eines unbefeuerten, geschleppten Verbrennungsmotors, wobei während der Bewegung des Ventils (10) positionsrelevante Werte desselben ermittelt werden, indem das Ventil (10) angeleuchtet oder Licht ausgesetzt wird und der Lichtdurchtritt und/oder eine Unterbrechung des Lichtdurchtritts zwischen dem Ventil (10) und einem damit korrespondierenden Ventilsitz (25) ermittelt wird, wobei die Ermittlung des Lichteintritts und/oder die Unterbrechung des Lichteintritts in den Brennraum (13) durch mindestens eine Zündkerzenbohrung (16) und/oder eine Einspritzdüsenbohrung hindurch erfolgt.

2. Verfahren nach Anspruch 1, **dadurch gekennzeichnet, dass** die Position des Ventils (10) zu einem Zeitpunkt ermittelt wird, zu dem kein oder nahezu kein Lichtdurchtritt und/oder ein maximaler Lichtdurchtritt ermittelbar ist.

3. Verfahren nach Anspruch 1 oder 2, **dadurch gekennzeichnet, dass** eine Seite des Ventils (10) beleuchtet oder Licht ausgesetzt wird und an einer anderen Seite des Ventils (10) der Lichtdurchtritt und/oder die Unterbrechung desselben ermittelt wird.

4. Verfahren nach Anspruch 3, **dadurch gekennzeichnet, dass** eine Seite des Ventils (10) von mindestens einer Lichtquelle beleuchtet wird, vorzugsweise die Beleuchtung einer solchen Seite erfolgt, die leicht zugänglich ist.

5. Verfahren nach einem der vorhergehenden Ansprüche, **dadurch gekennzeichnet, dass** der Lichtdurchtritt an einer solchen Seite des Ventils (10) ermittelt wird, die sich an einer relativ dunklen Stelle befindet, vorzugsweise in einem relativ dunklen Raum liegt und/oder einen solchen Raum begrenzt.

6. Verfahren nach einem der vorhergehenden Ansprüche, **dadurch gekennzeichnet, dass** der Lichtdurchtritt, insbesondere die Unterbrechung desselben, fortlaufend bei vorzugsweise mehreren Bewegungszyklen des jeweiligen Ventils (10) ermittelt wird.

7. Verfahren nach einem der vorhergehenden Ansprüche, **dadurch gekennzeichnet, dass** gezielt nur das Nichtvorhandensein und/oder ein maximaler Lichtdurchtritt fortlaufend ermittelt werden.

8. Verfahren nach einem der vorhergehenden Ansprüche, **dadurch gekennzeichnet, dass** eine Schließstellung mindestens eines Ventils (10), vorzugsweise aller Ventile (10), ermittelt wird.

9. Verfahren nach einem der vorhergehenden Ansprüche, **dadurch gekennzeichnet, dass** Licht dem jeweiligen Ventil (10) von einer zum Ventilschaft (20) weisenden Seite zugeführt wird, vorzugsweise durch einen Luftansaugkanal (18), einen Abgaskanal und/oder eine Einspritzdüsenbohrung.

10. Verfahren nach einem der vorhergehenden Ansprüche, **dadurch gekennzeichnet, dass** die Unterbrechung des Lichtdurchtritts beim jeweils geschlossenen Ventil (10) ermittelt wird, vorzugsweise aus einem Brennraum (13) heraus.

11. Verfahren nach einem der vorhergehenden Ansprüche, **dadurch gekennzeichnet, dass** zur Ermittlung der Intensität des Lichtdurchtritts und/oder der Unterbrechung des Lichtdurchtritts mindestens ein lichtsensitives Messorgan, insbesondere mindestens ein Lichtsensor, verwendet wird.

12. Verfahren nach einem der vorhergehenden Ansprüche, **dadurch gekennzeichnet, dass** der Verbrennungsmotor (11) bei der Ermittlung mindestens der Position des Ventils (10) mit einer Drehzahl von bis zu 200 min⁻¹, insbesondere etwa 100 min⁻¹ schleppend angetrieben wird.

## Claims

1. A method for determining the position of a valve (10) of an internal combustion engine driven in overrun mode in the non-activated state during cold testing, with position-related values of the valve (10) being determined during the movement of the latter in that the valve (10) is illuminated or exposed to light and the passage of light and/or an interruption of the passage of light between the valve (10) and a part corresponding thereto are determined, with the determination of the passage of light and/or the interruption of the passage of light into the combustion chamber (13) being carried out by at least one spark plug bore (16) and/or one injection nozzle bore.

2. The method as claimed in claim 1, **characterized in that** the position of the valve (10) is determined at a time at which no or virtually no passage of light and/or a maximum passage of light can be determined.

3. The method as claimed in claim 1 or 2, **characterized in that** one side of the valve (10) is illuminated or exposed to light and on another side of the valve (10) the passage of light and/or the interruption thereof is determined.

4. The method as claimed in claim 3, **characterized in that** one side of the valve (10) is illuminated by at least one light source, a side which is easily accessible preferably being illuminated.

5. The method as claimed in one of the preceding claims, **characterized in that** the passage of light is determined on a side of the valve (10) that is located at a relatively dark location, preferably which lies in a relatively dark space and/or bounds such a space.

6. The method as claimed in one of the preceding claims, **characterized in that** the passage of light, in particular the interruption thereof, is determined continuously, preferably during a plurality of movement cycles of the respective valve (10).

7. The method as claimed in one of the preceding claims, **characterized in that** only the absence and/or a maximum passage of light is selectively determined in a continuous manner.

8. The method as claimed in one of the preceding claims, **characterized in that** a closed position of at least one valve (10), preferably of all valves (10), is determined.

9. The method as claimed in one of the preceding claims, **characterized in that** light is fed to the respective valve (10) from a side which points to the valve stem (20), preferably through an air intake duct (18), an exhaust duct and/or an injection nuzzle bore.

10. The method as claimed in one of the preceding claims, **characterized in that** the interruption of the passage of light is determined when the respective valve (10) is closed, preferably from a combustion chamber (13).

11. The method as claimed in one of the preceding claims, **characterized in that** at least one light-sensitive measuring element, in particular at least one light sensor, is used to determine the intensity of the passage of light and/or the interruption of the passage of light.

12. The method as claimed in one of the preceding claims, **characterized in that** the internal combustion engine (11) is driven in overrun mode during the determination of at least the position of the valve (10) with a rotational speed of up to 200 min", in particular approximately 100 min⁻¹.

## Revendications

1. Procédé pour déterminer la position d'une soupape (10) lors d'un essai à froid d'un moteur à combustion interne remorqué non alimenté, dans lequel, pendant le déplacement de la soupape (10), des valeurs pertinentes relatives à sa position sont déterminées en éclairant ou en exposant la soupape (10) à de la lumière, et en déterminant le passage de la lumière et/ou une interruption du passage de la lumière entre la soupape (10) et une siège de soupape (25) correspondant à celle-ci, la détermination de l'incidence de la lumière et/ou de l'interruption de l'incidence de la lumière dans la chambre de combustion (13) s'effectuant par au moins un alésage de bougie d'allumage (16) et/ou un alésage d'injecteur.

2. Procédé selon la revendication 1, **caractérisé en ce que** la position de la soupape (10) est déterminée à un instant auquel on ne peut déterminer aucun ou pratiquement aucun passage de la lumière et/ou auquel on peut déterminer un passage de la lumière maximum.

3. Procédé selon la revendication 1 ou 2, **caractérisé en ce qu'**un côté de la soupape (10) est éclairé ou exposé à de la lumière, et sur un autre côté de la soupape (10), le passage de la lumière et/ou l'interruption de ce passage de la lumière sont déterminés.

4. Procédé selon la revendication 3, **caractérisé en ce qu'**un côté de la soupape (10) est éclairé par au moins une source de lumière, de préférence l'éclairage est effectué sur un côté qui est facilement accessible.

5. Procédé selon l'une quelconque des revendications précédentes, **caractérisé en ce que** le passage de la lumière est déterminé au niveau d'un côté de la soupape (10) qui se trouve dans un endroit relativement sombre, de préférence dans un espace relativement sombre, et/ou qui limite un tel espace.

6. Procédé selon l'une quelconque des revendications précédentes, **caractérise en ce que** le passage de la lumière, notamment l'interruption de ce passage de la lumière, est déterminé en continu, de préférence lors de plusieurs cycles de déplacement de la soupape respective (10).

7. Procédé selon l'une quelconque des revendications précédentes, **caractérisé en ce que** l'on ne détermine en continu spécifiquement que l'absence et/ou la présence d'un passage de la lumière maximal.

8. Procédé selon l'une quelconque des revendications précédentes, **caractérisé en ce que** l'on détermine une position de fermeture d'au moins une soupape (10), de préférence de toutes les soupapes (10).

9. Procédé selon l'une quelconque des revendications précédentes, **caractérise en ce que** de la lumière est acheminée à la soupape respective (10) depuis un côté tourné vers la tige de soupape (20), de préférence par un conduit d'admission d'air (18), un conduit de gaz d'échappement et/ou un alésage d'injecteur.

10. Procédé selon l'une quelconque des revendications précédentes, **caractérisé en ce que** l'interruption du passage de la lumière est déterminée pour chaque soupape fermée (10), de préférence à partir d'une chambre de combustion (13).

11. Procédé selon l'une quelconque des revendications précédentes, **caractérisé en ce que**, pour déterminer l'intensité du passage de la lumière et/ou de l'interruption du passage de la lumière, on utilise au moins un organe de mesure photosensible, notamment au moins un capteur de lumière.

12. Procédé selon l'une quelconque des revendications précédentes, **caractérisé en ce que** le moteur à combustion interne (11) est entraîné lors de la détermination d'au moins la position de la soupape (10) avec un régime allant jusqu'à 200 min⁻¹, en particulier d'environ 100 min⁻¹.
